# EUROPEAN PATENT APPLICATION

(11) **EP 1 627 588 A2**
(43) Date of publication of application: **22.02.2006**
(21) Application number: 05255124.9
(22) Date of filing: 18.08.2005
(51) Int. Cl.: A47K 17/02

(54) **Clamping device**

(30) Priority: 21.08.2004 GB 0418704
(71) Applicant: Days Healthcare UK Limited, Bridgend CF31 2AL (GB)
(72) Inventor: Diggins, Mark, C/o Days Healthcare UK Limited, Bridgend CF31 2AL (GB)
(74) Representative: Bailey, Richard Alan

(57) **Abstract**

The clamping device is for clamping a toileting aid to a toilet bowl. The device comprises a first arm 13 slidably insertable into a recess 15 in the toileting aid and a second arm 14 having a gripper 19 at or adjacent to its free end for gripping the toilet bowl. The device also has a lever support 20 projecting from the first arm and extending alongside at least part of the length of the second arm and a lever 21 pivotably connected to the lever support. The lever is provided with a cam 21 which acts on the second arm as the lever is pivoted from a first to a second position to deform the second arm and urge the gripper into engagement with the toilet bowl.

## Description

This invention relates to a clamping device for clamping a toileting aid such as a raised toilet seat to a toilet bowl.

It is known to provide toileting aids and to clamp these to the top of a toilet bowl. Known clamping devices clamping toileting aids to a toilet bowl utilise a screw threaded clamping mechanism. These suffer from the disadvantage that it is often difficult for elderly or infirm persons, particularly those suffering from arthritis, to operate these known screw threaded fastening mechanisms.

The invention seeks to provide a clamping device which is simpler and quicker to operate.

According to a first aspect of the present invention there is provided a clamping device for clamping a toileting aid to a toilet bowl, comprising a first arm slidably insertable into a recess in the toileting aid, a second arm having a gripper at or adjacent to its free end for gripping the toilet bowl, a lever support projecting from the first arm and extending alongside at least part of the length of the second arm and a lever pivotably connected to the lever support and provided with a cam which acts on the second arm as the lever is pivoted from a first to a second position to deform the second arm and urge the gripper into engagement with the toilet bowl.

Preferred and/or optional features of the first aspect of the invention are set forth in claims 2 to 6.

According to a second aspect of the invention there is provided a toileting aid in combination with a clamping device according to the first aspect of the invention.

The invention will now be more particularly described with reference to the accompanying drawings, in which:
Figure 1 is a side view of one embodiment of a clamping device according to the invention shown engaged in a channel-shaped recess of a toileting aid such as a raised toilet seat,
Figure 2 is a perspective view of the clamping device and channel-shaped recess of Figure 1,
Figure 3 is a side view of a clamping device with the lever omitted, and

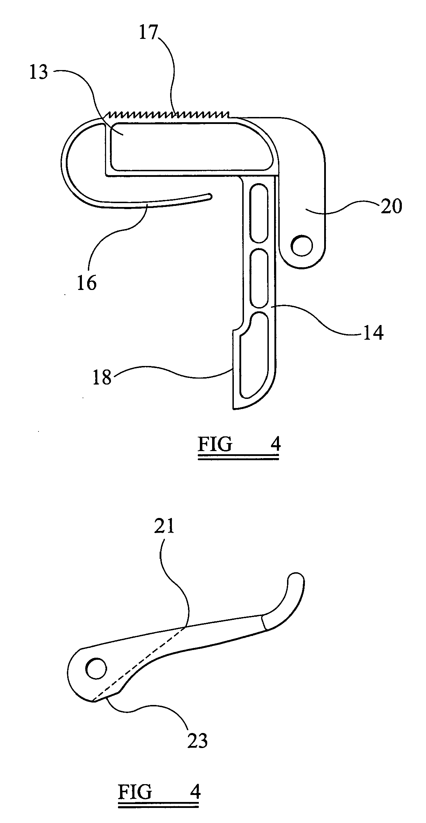

Figure 4 is a side view of the lever of the clamping device.

Referring to the drawings, the clamping device 10 shown therein is intended to clamp a toileting aid such as a raised toilet seat (not shown) to a toilet bowl (also not shown). In practice, there will be two such clamping devices 10 one on each side of the toilet bowl which in conjunction with a lip at the front of the toileting aid secure the toileting aid to the toilet bowl.

The clamping device 10 is typically formed of plastics material and comprises first and second arms 13 and 14, respectively, extending perpendicularly to one another.

The first arm 13 is slidable into a channel-shaped recess 15 in the toileting aid and has an urging element in the form of a resilient bowed member 16 which projects from the free end of the first arm 13 and then curves back underneath the first arm 13. The upper surface of the first arm 13 is serrated as shown by the reference numeral 17 and this upper surface engages complimentary serrations 22 on a wall of the recess 15 when it is urged against that wall by the urging element 16.

The second arm 14 has a foot portion 18 extending laterally therefrom and a gripper 19 in the form of a resilient pad secured thereto.

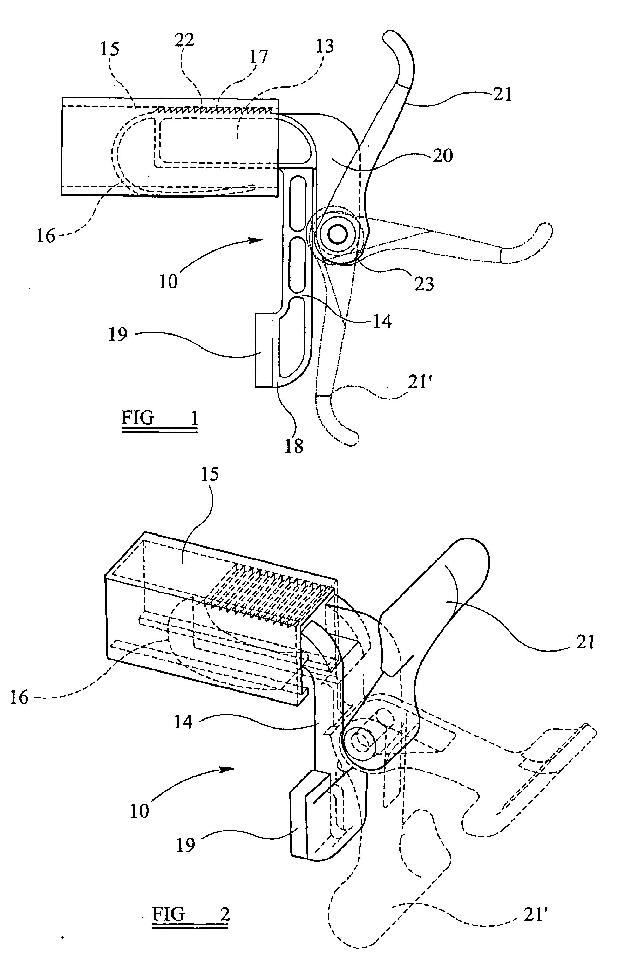

A lever support 20 projects from the end opposite the free end of the first arm 13 and then extends downwards alongside the second arm 14. A lever 21 is pivotably connected to the free end of the lever support 20 and this has a cam surface 23 which acts on the second arm 14 as the lever 21 is pivoted from a first position (shown in full lines in Figure 1) to a second position (shown at 21' in broken lines in Figure 1) to deform the second arm 14 and urge gripper 19 into clamping engagement with the toilet bowl 12.

The clamping device 10 described above is simpler and quicker to operate than known clamping devices utilising screw threaded fastening mechanisms.

Also, because of the interengaging serrations 17 and 22, the clamping devices retain their position relative to the toileting aid when the latter is released from the toilet bowl.

The embodiment described above is given by way of example only and various modifications will be apparent to persons skilled in art without departing from the scope of the invention as defined in the appended claims.

## Claims

1. A clamping device for clamping a toileting aid to a toilet bowl, comprising a first arm slidably insertable into a recess in the toileting aid, a second arm having a gripper at or adjacent to its free end for gripping the toilet bowl, a lever support projecting from the first arm and extending alongside at least part of the length of the second arm and a lever pivotably connected to the lever support and provided with a cam which acts on the second arm as the lever is pivoted from a first to a second position to deform the second arm and urge the gripper into engagement with the toilet bowl.

2. A clamping device as claimed in claim 1, wherein the first and second arms extend perpendicularly or substantially perpendicularly to one another.

3. A clamping device as claimed in claim 1 or claim 2, wherein the first arm has an urging element for urging the first arm against a wall of the recess in the toileting aid.

4. A clamping device as claimed in claim 3, wherein the urging element is a resilient bowed member which projects from the free end of the first arm and curves back alongside the first arm.

5. A clamping device as claimed in claim 3 or claim 4, wherein that part of the first arm that is, in use, urged into engagement with the wall of the recess is serrated.

6. A clamping device as claimed in any one of the preceding claims, wherein the gripper is a resilient pad.

7. A clamping device substantially as given before described with reference to the accompanying drawings.

8. A toileting aid in combination with a clamping device as claimed in anyone of claims 1 to 7.

9. The combination of claim 8 when dependent on claim 5, wherein said wall of the recess is also serrated to engage the serrations on the first arm.
